# EUROPEAN PATENT APPLICATION

(11) **EP 4 075 320 A1**
(43) Date of publication of application: **19.10.2022**
(21) Application number: 21168633.2
(22) Date of filing: 15.04.2021
(51) Int. Cl.: G06F 40/211, G06F 40/279, G06F 40/284, G06F 40/289

(54) **A METHOD AND DEVICE FOR IMPROVING THE EFFICIENCY OF PATTERN RECOGNITION IN NATURAL LANGUAGE**

(71) Applicant: Wonop Holding ApS, 9800 Hjørring (DK)
(72) Inventor: RØNNOW, Troels Frimodt, 9800 Hjørring (DK)
(74) Representative: AWA Denmark A/S

(57) **Abstract**

A method for recognizing patterns in natural language using a data processing device, the method comprising defining (101) a plurality of tokens, each token defining a group of words or a specific word instance, defining (102) a plurality of moderators, each moderator defining a number of times a specific token is to occur, defining (103) a qualifier, associating (104) the qualifier with a token of the plurality of tokens, the qualifier defining a criterion or property for a word of the group of words or of the specific word instance of the token, defining (105) a pattern, the pattern comprising at least the token associated with the qualifier and a moderator, and the pattern defining a sequence of natural language words, comparing (107) the pattern and a natural text string input to determine whether the input matches the pattern, wherein the step of comparing comprises determining (1071) whether a match with the token associated with the qualifier is found in the input, if such a match is found in the input, testing (1072) whether the match found matches the criterion or property defined by the qualifier, and determining (1073) that the input matches the pattern only if the match found matches the criterion or property defined by the qualifier.

## Description

### Technical Field

The present invention relates to method for pattern recognition in natural language, the method being intended for use in analysing sequences of words in natural language and aiming at improving the efficiency and precision of the pattern recognition.

The present invention also relates to a corresponding device, and to a non-transitory computer readable data storage device and a computer program product, respectively, comprising instructions which when executed on a computer causes the computer to perform a method according to the invention.

### List of terms

As used herein, **natural language** is intended to refer to language as it is used by natural human beings, including the many inherent ambiguities present in such language, particularly due to that a particular word may have different meanings both at face value and depending on the context.

As used herein, a **pattern** is intended to refer to any given sequence of words as occurring in natural language. A pattern is thus not to be understood as limited to a specific sequence of words, but may rather be any sequence of words.

As used herein, a **token** is intended to refer to a specific word or a specific group of words, including for instance one, two or more and even all words of a given sentence. A token may also refer to non-word characters that may appear in a sentence, such as punctuation, numbers, e-mail addresses and so forth. Thus, a pattern may be defined as a series of tokens.

As used herein, a **group of words** is intended to refer to words having a common denominator, such as for example a word class. A non-limiting example of such groups of words thus encompass word classes such as verbs, nouns, pronouns, adverbs, adjectives, prepositions, conjunctives and determiners, in which case a token may be expressed by the relevant word class. Another example is groups of words, such as "any word" or "unknown word".

As used herein, a **moderator** is intended to refer to an indication of the number of times a token, or a group of tokens, should occur within a pattern. Moderators may be expressed by selected symbols which are added to a token or a group of tokens. By way of a non-limiting example, using the token Noun, "Noun" (no moderator added to token) means exactly one word that is a noun, "Noun?" (moderator ? added to token) means a noun zero or one times, "Noun*" (moderator * added to token) means a noun any number of times and "Noun+" (moderator + added to token) means a noun one or more times. By way of another non-limiting example, using the pattern "(Noun Verb)" means a noun followed by a verb occurring exactly one time, "(Noun Verb)?" means a noun followed by a verb occurring zero or one time, "(Noun Verb)*" means a noun followed by a verb occurring zero or more times, and "(Noun Verb)*" means a noun followed by a verb occurring one or more times.

As used herein, a **group of tokens** is intended to refer to a sequence of tokens with associated modifies, qualifiers and so forth.

As used herein, an **operator** is intended to refer to a logic operator, such as OR, AND, NOT and the like. Thus, a specific example of such operators are Boolean operators.

As used herein, a **qualifier** is intended to refer to a function or a property of a word or a group of words. More specifically, a **qualifier** is intended to refer to a function that analyses at least one word or at least one group of words within the context in which the at least one word or the at least one group of words appears. A **qualifier** may thus be understood as a function taking a word or a group or list of words as an argument. The function value will be the value true or the value false expressing whether the word, the group or the list of words is qualified or not. There is no particular limits to this function, meaning that it may check or match for functions or properties of the word or list of words, but it may also perform more advanced tasks such as using statistical methods to determine whether the word or list of words is qualified in accordance with the logic of the function.

A function of a word may for instance be a particular conjugation of the word. A property of a word may for instance be a particular tense of the word. Many other functions and properties are also feasible, one example being a gender of the word. Another example which applies to words and groups of words alike is semantics of the word or group of words. In this context, the term **qualifier function** is intended to refer to a qualifier related to a function of a word while the term **qualifier criterion** is intended to refer to a qualifier related to a property of a word. For instance, a **qualifier function** can be function that is used by a machine learning program to qualify a word based on the function of the qualifier function.

By way of non-limiting example, consider the phrase "the meal tastes like the dog's bollocks" which basically means "the meal tastes great". The pattern Determiner Noun Verb (AnyWord*)[meansGood] qualifies a sentence where the last words means "good" and would match this phrase, yet it does not use any obvious features of the words. Note that you can qualify single words or list of words. By way of non-limiting example, if one for instance matches the input "the car is yellow" against the qualifier function "Determiner Noun[qualifier] Verb Adverb" the function "qualifier" will be called with the argument "car", i.e. "qualifier('car')". Also, if one matches the input "The car is yellow" against the qualifier function "(AnyWord*)[qualifier]" then the function will be called with a list of words, i.e. "qualifier(['the','car','is','yellow']). A qualifier may also analyze a plurality of words. For instance, (AnyWord AnyWord)[qualifier] consumes exactly two words and passes these to the qualifier function to qualify the group rather than individual words.

As used herein, a **capture** is intended to refer to a variable in which data of a particular predefined type may be stored.

### Background Art

Natural language processing and understanding is a field that moves fast. Companies that works in this field include Landbot, PandoraBots, Amazon Lex, Microsoft Bot Framework, Google Dialog, OpenAI and Viv (acquired by Samsung in 2016).

State-of-the-art approaches and methods used by these companies include pattern recognition and machine learning models such as deep learning models. Regarding pattern recognition, three popular approaches exist: Matching against exact phrases, matching against generalised patterns and using machine learning to identify intent of the user.

The present invention concerns itself with pattern recognition. Pattern recognition is a well-known technique where a pattern is expressed in terms of groups which each element belongs to.

For instance, Regular Expressions (Regex) is a pattern recognition language where numbers are denoted by a group name 'd' and ordinary letters by a group name 'w'. The pattern 'wd' then matches 'a9' or 'b7' Additionally, Regex has operators to express repetitions. For instance + means "occurs one or more times" and ? means "occurs zero or one time". In this way "w+d?" matches "hello9" and "blah", but not "hello99" or "9hello". This type of pattern recognition is aimed at sequential structures.

Another example of pattern recognition is XPath. Unlike Regex, XPath is used for at matching patterns in tree structures. One special feature about XPath is qualifiers. Qualifiers are specified as '//div/span[qualfier]/div '. Qualifiers are expressions that test a node for specific properties. Depending on whether the expression turns out to be true or false, the node is matched or not matched.

State of the art phrase analysis and modification frameworks includes Natural Language Toolkit (NLTK), SpaCy, TextBlob, Textacy, PyTorch-NLP, Retext, Compromise, Natural, Nlp.js, OpenNLP, StandfordNLP and CogCompNLP. StandfordNLP uses three types of pattern recognition: TokensRegex, Semgre and Tregex. Of these, TokensRegex and Compromise art to be emphasized here. TokensRegex can differentiate words on the basis of tags and properties. Compromise implements a sequential pattern matching for NLP applications. However, qualifiers do not exist in the framework of Compromise.

Routing based on pattern matching is the standard technique used in modern web technologies such as Django and Ruby on Rails. Typically, pattern matching is used in these technologies to match a text string and then call a function based on the match. This is done by creating pairs of patterns and functions (p1, f1), (p2, f2) and so on. The functions are then responsible for generating a response. When a user enters a URL with the path "/hello/" the path is matched against all patterns and once a match is found, the corresponding function is used to generate a response. This approach is based on patterns for characters.

US 2014/380285 A1 discloses a dynamically evolving cognitive architecture system based on a natural language intent interpreter. A system forms an intent based on a user input, and creates a plan based on the intent. The plan includes a first action object that transforms a first concept object associated with the intent into a second concept object and also includes a second action object that transforms the second concept object into a third concept object associated with a goal of the intent. The first action object and the second action object are selected from multiple action objects. The system executes the plan, and outputs a value associated with the third concept object.

However, analysing and understanding natural language text remains a difficult task. In particular, analysing sequences of words of natural language can be difficult because of the inherent ambiguity of words. For instance, if trying to classify a phrase using the pattern "Determiner Noun Verb Determiner Noun", it would match "The car is a vehicle" but it would also match "The drive drive a drive". It is thus still an issue that the result of analysing and understanding natural language text may be too error prone and therefore provide results that are not satisfactory to the user.

Thus, there is still a need for a method for pattern recognition in natural language which is more precise and efficient, which provides pattern recognition with a reduced error rate and which further requires less computer resources, particularly less computer memory and temporary storage, and saves computer power and time.

Considering the wide variety of uses in which analysing and understanding natural language text is essential, such as searches, voice recognition and the like, there is also still a need for a method for pattern recognition in natural language which is more precise and efficient such as to provide more precise results to the user.

### Summary of Invention

It is therefore the object of the invention to provide method for pattern recognition in natural language with which the above problems are reduced or even eliminated altogether.

It is a further object of the invention to provide such a method which is more precise and efficient, which provides pattern recognition with a reduced error rate and which further requires less computer resources, particularly less computer memory and temporary storage, and saves computer power and time.

It is a still further object of the invention to provide such a method for pattern recognition in natural language which is more precise and efficient, and which provides more precise results to the user.

These and other objects are achieved by means of a computer-implemented method for recognizing patterns in natural language using a data processing device, the method comprising the steps of:
defining a plurality of tokens, each token defining a group of words or a specific word instance,
defining a plurality of moderators, each moderator defining a number of times a specific token is to occur,
defining at least one qualifier,
associating the at least one qualifier with at least one token, or at least one group of tokens, of the plurality of tokens, the at least one qualifier defining at least one criterion or property for at least one word of the group of words or of the specific word instance of the at least one token, or the at least one group of tokens,
based on the plurality of tokens and the plurality of moderators defining at least one pattern, the at least one pattern comprising at least the at least one token, or the at least one group of tokens, associated with the at least one qualifier and at least one moderator, and the at least one pattern defining a sequence of natural language words,
providing an input comprising a text string of natural language,
comparing the at least one pattern and the input to determine whether the input matches the at least one pattern, wherein the step of comparing comprises:
   - determining whether a match with the at least one token, or the at least one group of tokens, associated with the at least one qualifier is found in the input,
   - if a match with the at least one token, or the at least one group of tokens, associated with the at least one qualifier is found in the input, testing whether the match found matches the criterion or property defined by the qualifier, and
   - determining that the input matches the least one pattern only if the match found matches the criterion or property defined by the qualifier.

Thereby, and especially by defining at least one qualifier defining at least one criterion or property for at least one word of the group of words or of the specific word instance of the at least one token, associating the at least one qualifier with at least one token of the plurality of tokens, and using the qualifier as described above when determining whether a match exists between a given pattern and an input text string, and further by defining the pattern as described above, a method is provided which is more precise and efficient and which provides pattern recognition with a reduced error rate.

As this method is more precise and efficient, such a method makes is quicker to determine whether a match exists between the given pattern and an input text string. Thereby, execution of the method in turn requires less computer resources, particularly less computer memory and temporary storage, and saves computer power and time. Also, this method is easier and more efficient to program and thus takes up less space when installed on a computer.

Methods according to the invention may be used for many purposes in which pattern recognition of inputs containing natural language text is of the essence. The input may be provided form in principle any feasible source, including text sources and audio sources. A particularly relevant use of a method according to the invention is to provide feedback to a user of a computer system. For instance, when a user makes a search, say for a particular type of places, e.g. restaurants or hotels, in a given area, such a method provides more accurate and less error prone results since the intent of the user may be determined with a high degree of precision.

In another example, the method may be used in voice recognition applications, such as when a user desires to make a phone call or send a text message using voice recognition, e.g. when driving a vehicle. In such implementations, the method according to the invention provides for a high degree of certainty for that the voice or audio input is recognized correctly and thus for instance that the phone call is made or the message is sent to the correct contact person.

Thus, in more general terms, as the method according to the invention provides for more efficient and precise and less error prone natural language recognition, it in turn also provides for more precise and useful search results and voice recognition.

In an embodiment, the method comprises the further step of defining at least one operator, wherein the step of defining at least one pattern is additionally based on the at least one operator such that the at least one pattern comprises at least the at least one token, or the at least one group of tokens, associated with the at least one qualifier, at least one moderator and at least one operator.

Thereby, a method is provided which is further improved in terms of precision and efficiency, and which provides pattern recognition with a further reduced error rate.

In an embodiment, the method comprises the further step of defining within the pattern at least one sub-pattern, wherein the step of comparing the at least one pattern and the input to determine whether the input matches the at least one pattern comprises comparing the at least one sub-pattern and the input to determine whether the input comprises a match to the sub-pattern, and determining that the input matches the least one pattern only if the at least one sub-pattern is determined to be comprised in the input.

Thereby, a method is provided which is further improved in terms of precision and efficiency, especially as the method may test for the sub-pattern specifically to determine whether a match exists, and if the sub-pattern is not found may determine that no match exists ad may terminate. Such a method further requires even less computer memory and temporary storage use and saves computer power and time.

In an embodiment, the method comprises the step of adding to the at least one token, or to the at least one group of tokens, at least one capture associated with at least one of a group of words or a specific word instance, wherein the at least one capture is associated with a variable and wherein the step of comparing comprises searching for the at least one of the group of words or the specific word instance associated with a capture and, if found, store the at least one of the group of words or the specific word instance in the variable associated with the capture.

Thereby, a method is provided which is further improved in terms of precision and efficiency, and which provides pattern recognition with a further reduced error rate.

In an embodiment, the qualifier is a qualifier function, the qualifier function defining a function, which defines at least one criterion of the group of words or of the specific word instance of the at least one token, or of the at least one group of tokens, and which as input takes one or more function arguments, including an argument being at least one word, or a list of words, of the input to be matched. The step of comparing the at least one pattern and the input to determine whether the input matches the at least one pattern then comprises:
i) calling the qualifier function with one or more words of the input as one or more function arguments,
ii) determining whether at least one word, or a list of words, of the input matches one or more criteria defined by the qualifier function, and
iii) determining that the input matches the least one pattern only if at least one word of the input matches the one or more criteria defined by the qualifier function.

In an additional or alternative embodiment, the qualifier is a qualifier criterion which defines at least one property associated with at least one word, or a list of words, of the group of words or of the specific word instance of the at least one token, or of the at least one group of tokens, and which as input takes one or more function arguments, including an argument being at least one word, or a list of words, of the input to be matched. The step of comparing the at least one pattern and the input to determine whether the input matches the at least one pattern then comprises:
i) testing the qualifier criterion with one or more words of the input as one or more arguments,
ii) determining whether a match with the at least one word of at least one of the group of words and the specific word instance associated with a qualifier criterion is found in the input,
iii) if a match is found, testing whether the match found matches the at least one property defined by the qualifier criterion, and
iv) determining that the input matches the least one pattern only if the match found matches the at least one property defined by the qualifier criterion.

The use of qualifier functions and/or qualifier criteria provides for a method with which properties of words, such as conjugations, tenses, semantics, meaning, similarity to other words, genders and singularity vs. plurality, may be tested for and determined in a very simple manner and with a particular high degree of precision and efficiency. Thereby, the method provides pattern recognition with a further reduced error rate, and further requires less computer memory and temporary storage use and saves computer power and time.

In an embodiment, the method further comprises defining, based on at least the plurality of tokens and the plurality of moderators, at least one further pattern, wherein the at least one further pattern comprises embedded therein the at least one pattern, or wherein the at least one pattern comprises embedded therein the at least one further pattern.

Thereby, a method is provided with which previously defined patterns may be modified or reused in a particularly simple and efficient manner. This provides for a method which is further improved in terms of precision and efficiency, and which requires less computer memory and temporary storage use and saves computer power and time.

In an embodiment, the method comprises further comprises the step of, based on the at least one pattern defining a sequence of natural language words, creating an executable abstract syntax tree, wherein the step of comparing the at least one pattern and the input to determine whether the input matches the at least one pattern is performed based on the executable abstract syntax tree.

Thereby, a method is provided which is further improved in terms of precision and efficiency, especially as the method may use the syntax tree to test for the pattern in a particularly simple and efficient manner. Such a method further requires even less computer memory and temporary storage use and saves computer power and time.

In an embodiment, the method further comprises the step of generating an output, such as an output indicating whether the input matches the at least one pattern or an output resulting from the input actually matching the pattern.

Such an output may be a simple message indicating whether a match has been found. Alternatively, more advanced outputs may be generated, such as outputs relating to or resulting from a match actually being found. Such outputs may by way of just a few examples be search results, placing a phone call or a display of the actual text string.

Thereby, a method is provided with which a user is presented with the result of the comparison in a particularly simple and easy to understand manner.

In an embodiment, the input comprising a text string of natural language is provided from a database or memory within the data processing device.

Alternatively, the input comprising a text string of natural language is provided using an external input device coupled to the data processing device. The external input device may be any suitable input device, including but not limited to a keyboard, a mouse, a touch screen and a microphone.

Due to the possibility of accepting a wide variety of input sources, a very versatile method which may be implemented in a wide variety of uses, including also voice recognition, is provided for.

In a second aspect of the invention the above and further objects are achieved by means of a device for recognizing patterns in natural language, the device comprising a data processing device, and a non-transitory computer readable data storage device, the non-transitory computer readable data storage device comprising instructions configured for execution at the data processing device such as to cause the data processing device to perform a method according to the invention.

In a third aspect of the invention the above and further objects are achieved by means of a non-transitory computer readable data storage device comprising instructions which, when executed on a computer, causes the computer to perform a method according to the invention.

In a fourth aspect of the invention the above and further objects are achieved by means of a computer program product comprising instructions which, when the program is executed by a computer, cause the computer to perform a method according to the invention.

### Brief Description of Drawings

In the following description embodiments of the invention will be described with reference to the schematic drawings, in which
Figs. 1-5 show block diagrams illustrating different embodiments of a method according to the invention.
Fig. 6 shows a block diagram illustrating at least a part of an exemplary comparison procedure of a method according to the invention.
Fig. 7 shows a block diagram illustrating a first embodiment of a pattern created by and to be matched in a method according to the invention.
Fig. 8 shows a block diagram illustrating a second embodiment of a pattern created by and to be matched in a method according to the invention in which priorities have been added to the different parts of the pattern.
Fig. 9 shows a schematical illustration of a device according to the invention.

### Description of Embodiments

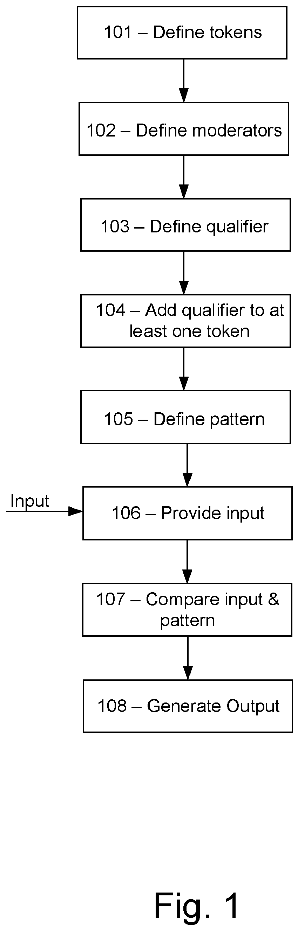

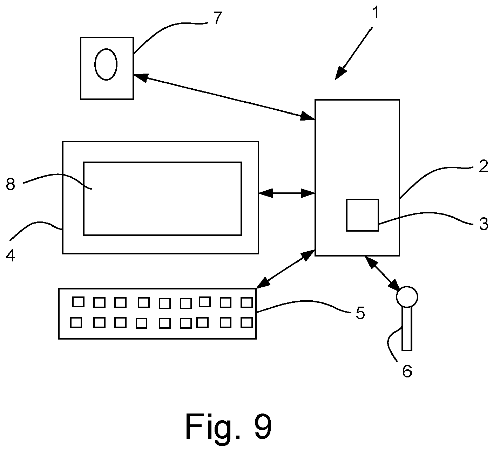

Referring first to Fig. 1, a first embodiment of a method according to the invention is shown. The method is a computer-implemented method for recognizing patterns in natural language using a data processing device (cf. Fig. 9). The method is a method for defining and executing computer logic, such as a machine code. The machine code may be made in any feasible computer programming language, such as but not limited to C++, PHP, Python or any other programming language. The machine code may be executed by one or more processing units such as x86 processor, an ARM Neon processor, i9-10900KF, punch cards or any other system for performing logical operations.

The method generally and a as illustrated in Fig. 1 comprises the following steps.

In step 101, a plurality of tokens is defined. Each token defines a group of words or a specific word instance. The thus defined tokens may be saved in a computer storage device for later use.

In step 102, a plurality of moderators is defined. Each moderator defines a number of times a specific token is to occur. The thus defined moderators may be saved in a computer storage device for later use.

In step 103, at least one qualifier is defined. The at least one qualifier defines at least one criterion or property for at least one word or a list of words of the group of words. The thus defined qualifiers may be saved in a computer storage device for later use.

In step 104, the at least one qualifier is associated with at least one token of the plurality of tokens. The at least one qualifier may be associated with one token, with more than one token (e.g. two or three tokens) or even with a group of tokens. The at least one qualifier is thus now brought to define at least one criterion or property for at least one word of the group of words or of the specific word instance of the at least one token to which it is associated.

In step 105, at least one pattern is defined based on the plurality of tokens and the plurality of moderators. The at least one pattern defines a sequence of natural language words. The pattern is to be used for matching against an input in the form of a text string of natural language words.

The resulting pattern is made up of a sequence of tokens described by groups (Noun, AnyWord, Verb, UnknownWord, etc.) or specific word instances ("be", "has") together with occurrence moderators (for instance ?, *, +, etc) that defines how many times the pattern should occur. For instance, "Noun" means match exactly one word that is a noun, "Noun?" means match a noun zero or one times, "Noun*" means match a noun any number of times and "Noun+" means match a noun one or more times. As an example, "Noun" matches "car" but not "car car" or "have". The pattern "Noun?" matches "car", "" but not "car car" or "have". The pattern "Noun+" matches "car", "cheese car", "car car car" and so on, but does not match "" or "have". Likewise, "Noun*" matches "", "car", "car car", "car car cheese" etc. As another example, the pattern "'car' Verb" matches "car is", "car were", but not "cars were", "car car" or "".

The at least one pattern comprises at least the at least one token associated with the at least one qualifier and at least one moderator. In other words, the at least one pattern comprises at least one token, one moderator and one qualifier. The thus constructed patterns may be saved in a computer storage device for later use. The computer storage device may in this way in principle comprise a database of patterns against which the input may be compared and matched.

The at least one pattern may also comprise a group of tokens. For instance, ((Determiner Noun[isVehicle] Verb?)[qualifier1]+)[qualifier2] results in first finding a Determiner, Noun and Verb, where the noun is qualified by the qualifier "isVechicle", and where all three words are qualified by "qualifier1". This pattern is then repeated at least once and all words caught by (Determiner Noun[isVehicle] Verb?)[qualifier1]+) are finally qualified by "qualifier2". Consider a sentence such as "the car is a taxi". The first part, "the car is" would be matched by "Determiner Noun[isVehicle] Verb?". In this process, "car" would be tested by "isVehicle". Then the words ["the", "car", "is"] would be tested by qualifierl(["the", "car", "is"]). Subsequently, "a taxi" would be matched by "Determiner Noun[isVehicle] Verb?". Here, "taxi" would be tested by isVehichle. Again, "qualifier1" would be used on ["a", "taxi"]. Finally, the whole ist of words would be tested with qualifier2, i.e. qualifier2(["the", "car", "is", "a", "taxi"]). For instance, qualifier2 could test whether the semantics are correct.

By using qualifiers, the method may allow for implementation of functions and use these functions to test whether certain criteria for the word being matched is fulfilled. In order to do so, the function would signal the result. In one embodiment this would be done by returning a Boolean. In another embodiment this could be done using error signals such as raising an error. As an example of this functionality, the implementation may allow a notation like "Verb[isBeDerivative]" where "isBeDerivative" is a function that takes one or more function arguments with one of them being the word which is currently attempted to be matched, i.e. a word of the input text string. In this example, the function would test whether the word is a derivative of "be". This pattern would match "is", "was", "were", but not "has", "can", "car car" or "". These functions are referred to herein as qualifier functions.

For example, one of the function arguments of the qualifier function specifies the partial pattern captures. For example, "x=Determiner y=Noun[isCorrect]" would potentially match the phrase "one car". The algorithm would first match "one", storing it into the variable x. It would then try to match the word "car" by first testing that the class is a Noun and then invoking the function "isCorrect". The function would be passed the word "car" with all its properties alongside with the partial captures. At this stage the partial captures would contain "x" which would store the word "one" with all its properties. The function "isCorrect" would now have access to these values and would be able to test each of the words in the partial capture for specific properties. As the current example, it could be used to determine if determiner and noun both are singular or plural. In this case, the function would test that "x" is singular if the current word tested is also singular and likewise that it is plural if the current word tested is also plural. If that would be the case the function would return true, and otherwise false. If the function "isCorrect" would return a negative value, or raise an error signal, the algorithm would backtrack. In case it would return a positive value and/or it would not raise an error, the word "car" would be stored in the variable "y". With the implementation of "isCorrect" described previously, the pattern would match "one car", "two cars", but not "one cars" or "two car".

By using qualifiers, the method may additionally or alternatively allow for specifying a method for testing properties of the words being matched. As an example of this, the implementation may allow a notation like "Verb[@isPresentTense]" where "@isPresentTense" defines a property to be tested on the word. In this example, the verb would be tested on the property "isPresentTense" and the example pattern would match "is" or "has", but not "were", "was" or "had". In another embodiment, multiple properties may be support through logic "Verb[@isPresentTense ∥ @isInfinitive]" where the double pipe "||" denotes a logical or meaning that either of the two attributes may be present. This is referred to herein as a qualifier criterion. Also, we collectively refer herein to either of qualifier criteria or qualifier function as the qualifier or a qualifier by which is meant either of the two.

For example, the qualifier criteria's functionality may be extended to include the partial captures. For example, "x=Determiner y=Noun[(@isPrural && x.isPlural) || (@isSingular && x.isSingular)]" would potentially match the phrase "one car". The qualifier criteria here now have access to words captured up until the current match point and would allow these to be used in the match criteria. The algorithm would first match "one", storing it into the variable x. It would then try to match the word "car" by first testing that the class is a Noun and then evaluate the qualifier criteria. In this example, it would test that if the capture "x" is plural and the current word is plural, or if the capture "x" is singular and the current word is singular, then the match would be successful and otherwise not. The pattern would in this case match "one car", "two cars", but not "one cars" or "two car".

Referring again to Fig. 1, in step 106 an input is provided. The input comprises a text string of natural language, which is to be matched against the pattern defined in step 105. In principle, the input may be provided at any point in the method before comparing or matching the input with the pattern. That is, step 106 is in any event performed before step 107 but may be performed before or after any one of steps 101-105.

In step 107, the matching or comparison is performed. The at least one pattern defined in step 105 and the input provided in step 106 are compared to determine whether the input matches the pattern.

Finally, in step 108, an output is generated. The output indicates whether a match is found in step 107. It is noted that step 108 is an optional step 108. The output may be any feasible and relevant output. For instance, the output may be a simple message indicating whether a match has been found. Alternatively, more advanced outputs may be generated, such as outputs relating to or resulting from a match actually being found. Such outputs may by way of just a few examples be a display of search results, placing a phone call, sending a text message or a display of the actual text string.

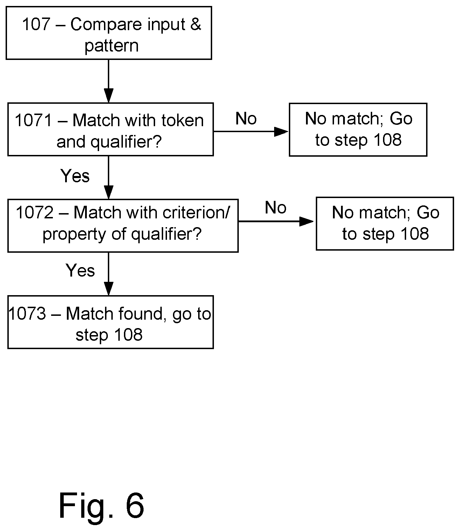

Referring now also to Fig. 6, the step 107 of comparing generally comprises the following steps.

In step 1071, it is determined whether a match with the at least one token associated with the at least one qualifier is found in the input.

If no match for the token associated with the qualifier is found, the method concludes that the input and the pattern does not match. The method may then terminate, it may perform a new comparison using another pattern, i.e. start anew, or it may proceed to step 108 and generate an output indicating that no match has been found.

If a match with the at least one token associated with the at least one qualifier is found in the input, the method proceeds to step 1072. In step 1072 the method tests whether the at least one word of the input matching with the at least one word of the at least one token associated with the at least one qualifier matches the criterion or property defined by the qualifier.

If no match for criterion or property defined by the qualifier is found, the method concludes that the input and the pattern does not match. The method may then terminate, it may perform a new comparison using another pattern, i.e. start anew, or it may proceed to step 108 and generate an output indicating that no match has been found.

If at least one word of the input is found to match the criterion or property defined by the qualifier, the method proceeds to step 1073 and determines that the input matches the least one pattern. The method then terminates, or it may proceed to step 108 and generate an output indicating that a match has been found.

The step 107 of comparing may also comprise additional steps directed to comparing other tokens and moderators of the pattern to the input provided in step 106, such as to ensure that a full comparison with the pattern defined in step 105 is performed.

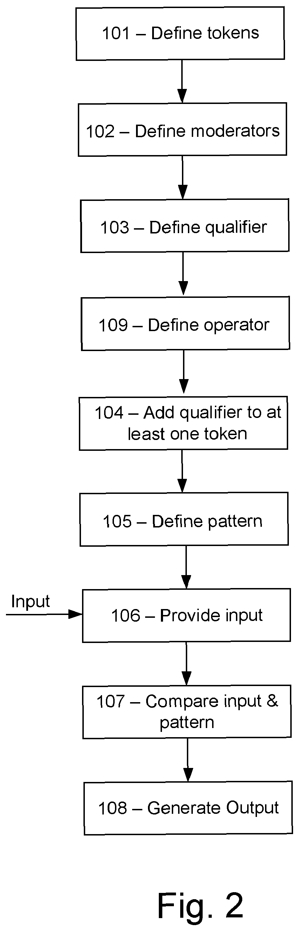

Turning now to Figs. 2-5, further optional steps of a method according to the invention will be described.

Referring to Fig. 2, the method according to the invention may comprise the further step 109 of defining at least one operator. Step 105 of defining at least one pattern may then additionally be based on the at least one operator such that the at least one pattern comprises at least the at least one token associated with the at least one qualifier, at least one moderator and at least one operator. The operator may be arranged between any two tokens. Where present, step 109 may thus be performed at any time before step 105. Thereby, the method may additionally implement logic operators such as OR. The operator OR may be denoted by the pipe symbol |. A pattern described as "Verb | Noun" would then match "have" or "car", but not "have car" or "the".

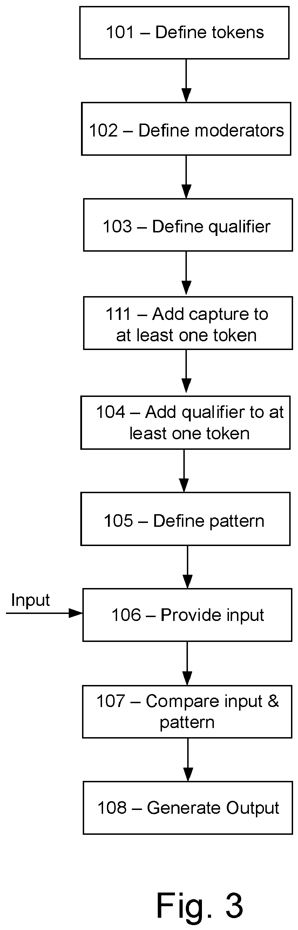

Referring to Fig. 3, the method according to the invention may comprise the further step 111 of adding to the at least one token at least one capture associated with at least one of a group of words or a specific word instance. The at least one capture is associated with a variable. The step of comparing may then comprise searching for the at least one of the group of words or the specific word instance associated with a capture and, if found, store the at least one of the group of words or the specific word instance in the variable associated with the capture.

This functionality allows naming of captures or capture of individual entities. For instance, "x=Noun y=Verb" would match "car is" where the word "car" is captured and stored in the variable x and "is" is captured and stored in "y". Likewise, "Determiner x=Noun y=Verb" would match "the car is" where "the" is not store", "car" is stored in the variable "x" and "is" is stored in the variable "y".

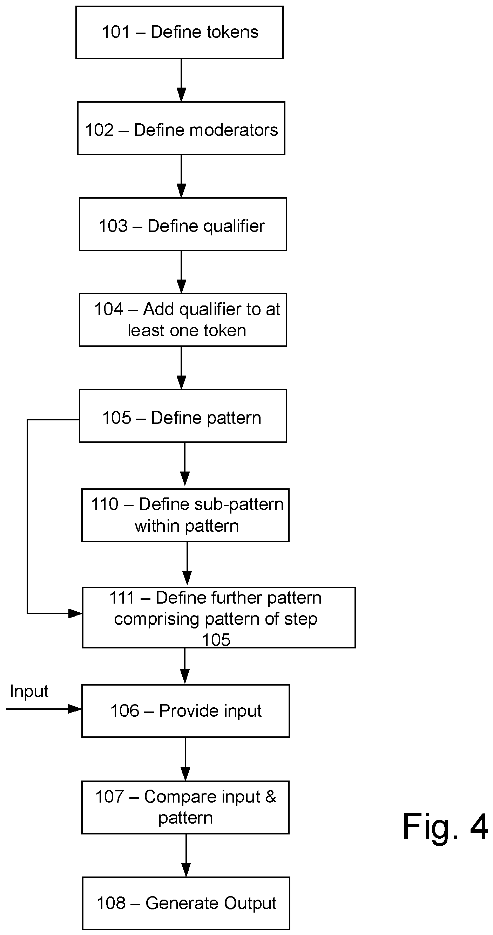

Referring to Fig. 4, the method may also comprise a step 110 of defining within the pattern defined in step 106 at least one sub-pattern. The step 107 of comparing the at least one pattern and the input to determine whether the input matches the at least one pattern may then comprise comparing the at least one sub-pattern and the input to determine whether the input comprises a match to the sub-pattern, and determining that the input matches the least one pattern only if the at least one sub-pattern is determined to be comprised in the input.

For instance, the method may enable sub-patterns by supporting grouping. Grouping may e.g. be indicated by parentheses, i.e. "(" and ")". A group describes a sub pattern which must be matched for the pattern to be a valid match to a phrase. For example, "(Determiner Noun|Pronoun) Verb" would match "the car is" or "i am" but not "the me is", "" or "have".

Referring still to Fig. 4, the method may also, additionally or alternatively, comprise a step 112 of defining, based on at least the plurality of tokens and the plurality of moderators, at least one further pattern. The at least one further pattern may comprise embedded therein the at least one pattern. Alternatively, the at least one pattern may comprise embedded therein the at least one further pattern.

Adding step 110 and/or step 111 to the method allows for defining multiple named or unnamed patterns and embedding a previously defined pattern into a new pattern. Thereby, patterns may be defined in a simpler and quicker manner using less computer resources. As an example, one may define the pattern "TestPattern1: x=Determiner Noun". This pattern is name "TestPattern1" and is defined as "x=Determiner Noun". We can now define a new pattern: "TestPattern2: TestPattern1 Verb Noun" which defines a pattern named "TestPattern2" consisting of three components "TestPattern1 Verb Noun". In effect or in actuality, "TestPattern2" is equivalent to the pattern "x= Determiner Noun Verb Noun".

As another example, one may define the pattern "TestPattern1: x=Determiner Noun[isCorrect]". Here "isCorrect" is a qualifier, that is, either a qualifier function or a qualifier criteria. This pattern is name "TestPattern1" and is defined as "x=Determiner Noun". We can now define a new pattern: "TestPattern2: TestPattern1 Verb Noun" which defines a pattern named "TestPattern2" consisting of three components "TestPattern1 Verb Noun". In effect or in actuality, "TestPattern2" is equivalent to the pattern "x=Determiner Noun[isCorrect] Verb Noun".

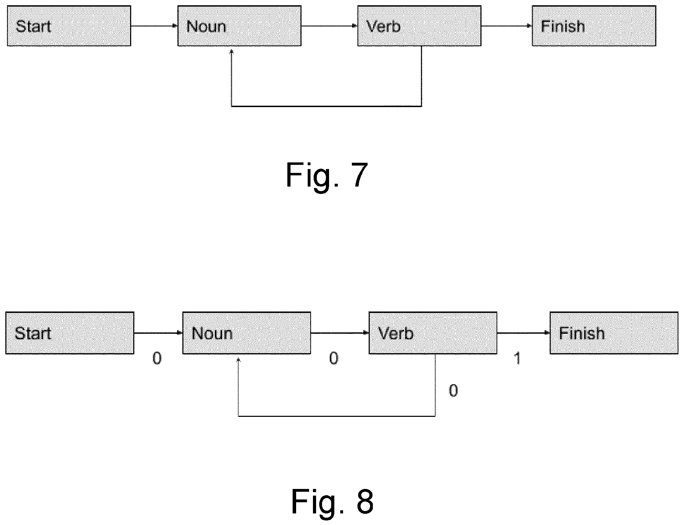

Referring now to Figs. 7 and 8 an embodiment of the method according to the invention is described. This embodiment of the method may be explained by defining a graph that represents the pattern one wishes to match. As an example the pattern "(Noun Verb)+" can be represented by the graph of Fig. 7. According to Fig. 7, the method starts at "Start". Then, given an input phrase, words are matched on a one-by-one basis starting with the first word and ending with the last. The phrase "car is" would be match by this pattern as the algorithm first would attempt to match "car" which is a noun and then "is" which is a verb. The algorithm would then be able to reach the finish node in the graph which makes it a valid match.

One important aspect of such an implementation is that the edges has a precedence and the precedence decides which edge is used first and which edge is use last. Referral is now made to Fig. 8, in which lower number indicates higher priority.

After matching the word "is" in the example of Fig. 8, the algorithm will first walk to node "Noun". Here it will realise that the phrase is out of words and backtrack to "Verb". Then the next edge (1) will ensure that the algorithm will visit "Finish" and since the phrase is depleted the match is successful.

Another example would be an attempt to match "car is car". Here the algorithm would start at "Start", then match "car" against Noun followed by matching "is" against Verb. It would then follow the 0'th edge to "Noun" which would constitute a match and move on to Verb. At this point the phrase would be depleted and hence the algorithm would not be able to match the Verb. As a result, the algorithm would backtrack until it was back at "Verb". It would then continue along edge 1 to arrive at Finish. However, finish would not be a match as the phrase would not be depleted. This would result in further backtracking until the algorithm would be back at start and the matching had failed.

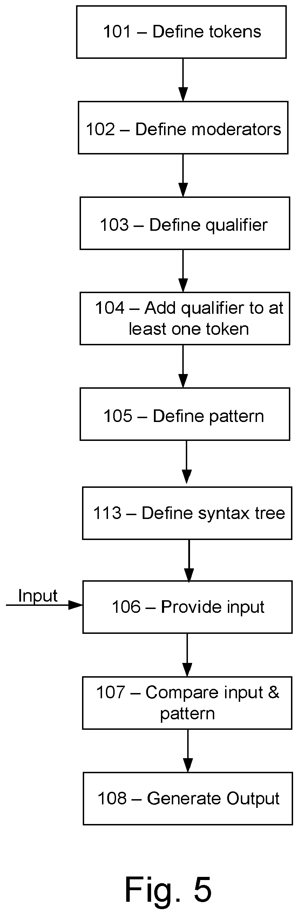

Referring now to Fig. 5, the method may also, additionally or alternatively, comprise a step 113 of, based on the at least one pattern defining a sequence of natural language words, creating an executable abstract syntax tree. The step of comparing the at least one pattern and the input to determine whether the input matches the at least one pattern may then be performed based on the executable abstract syntax tree.

The method and device according to the invention may thus use the pattern recognition system to create an executable abstract syntax tree from natural language.

The method may further comprise steps to define replacement of sub-patterns with new patterns. As an example, one may define the mapping "Determiner Noun" => NounPhrase", which instructs the program to replace all Determiner Noun combinations with a new object NounPhrase.

Furthermore, the method may comprise additional steps of rearranging and/or rephrasing the objects in the pattern. As an example, one may define the map "d=Determiner n=Noun v=Verb a=AnyWord* => v d n a" which transforms a statement to a question. This mapping would change "the car is blue" to "is the car blue".

Likewise, the method may comprise steps to remove words from a phrase. As an example, the mapping "d=Determiner n=Noun Determiner Verb Adjective v=Verb a=AnyWord => d n v a". In this example, the phrase "the car which is blue is nice" is transformed into "the car is nice". This reduces the complexity and makes it easier for computer processing.

The mapping function may allow the building of a tree structure. As an example, the mapping "d=Determiner n=Noun Determiner details=(Verb Adjective) v=Verb a=AnyWord => d n[details] v a". In this example, the phrase "the car which is blue is nice" is transformed into "the car is nice". The object car is further given children "is" "blue" which allows a computer program to understand the details of "car".

The method may further make it possible to associate logical functions with the resulting tree structure which allows computational execution of the final tree. As an example, consider the pattern "n1=Number s=Symbol n2=Number => ExecuteCalculation[s n1 n2]" where ExecutionCalculation is a function that takes three words as arguments and returns a number. This mapping would construct a tree.

Referring finally to Fig. 9, a device 1 according to the invention and configured to perform a method according to any embodiment of the invention described herein is illustrated.

Generally, the device 1 is a device for recognizing patterns in natural language. Generally, the device 1 comprises a data processing device 2 and a data storage device 3. The data storage device 3 comprises instructions configured for execution at the data processing device 2 such as to cause the data processing device to perform a method according to any embodiment of the invention described herein.

The device 1 may further optionally comprise an output device or display 4 for showing an output generated in step 108 of the method. The display 4 may also be used to show an input provided in step 106 of the method. The device 1 may further optionally comprise another output device, such as a loudspeaker 7, for issuing an output generated in step 108 of the method. The device 1 may further optionally comprise an input device 5, 6, 8 for allowing a user to provide the input provided in step 106 of the method.

The device 1 may be a natural language processing unit/engine with a structure that resembles or even closely follows modern web applications. For instance, the device 1 may be desktop computer, a laptop computer, a tablet computer or a mobile telephone with suitable software or apps installed thereon. The device 1 may also be provided with a computer readable data storage device comprising instructions which, when executed on a computer, causes the computer to carry out a method according to any embodiment of the invention described herein. The device 1 may also be provided with a computer program product comprising instructions which, when the program is executed by a computer, cause the computer to carry out a method according to any embodiment of the invention described herein.

The data processing device 2 may be one or more processing units of any feasible type, including such processing devices as an x86 processor, an ARM Neon processor, i9-10900KF, punch cards or any other suitable system for performing logical operations.

The storage device 3 may for instance be a storage system such as a database, a hard drive and computer memory.

The input device 5 may be any feasible type of input device. For instance, the input device 5 may be a mouse, a keyboard 5, a touch screen 8, a microphone 6 or the like.

The person skilled in the art realizes that the present invention by no means is limited to the preferred embodiments described above. On the contrary, many modifications and variations are possible within the scope of the appended claims.

## Claims

**1.** A computer-implemented method for recognizing patterns in natural language using a data processing device, the method comprising the steps of:
defining (101) a plurality of tokens, each token defining a group of words or a specific word instance,
defining (102) a plurality of moderators, each moderator defining a number of times a specific token is to occur,
defining (103) at least one qualifier,
associating (104) the at least one qualifier with at least one token, or at least one group of tokens, of the plurality of tokens, the at least one qualifier defining at least one criterion or property for at least one word of the group of words or of the specific word instance of the at least one token, or the at least one group of tokens,
based on the plurality of tokens and the plurality of moderators defining (105) at least one pattern, the at least one pattern comprising at least the at least one token, or the at least one group of tokens, associated with the at least one qualifier and at least one moderator, and the at least one pattern defining a sequence of natural language words,
providing (106) an input comprising a text string of natural language,
comparing (107) the at least one pattern and the input to determine whether the input matches the at least one pattern, wherein the step of comparing comprises:
- determining (1071) whether a match with the at least one token, or the at least one group of tokens, associated with the at least one qualifier is found in the input,
- if a match with the at least one token associated with the at least one qualifier is found in the input, testing (1072) whether the match found matches the criterion or property defined by the qualifier, and
- determining (1073) that the input matches the least one pattern only if the match found matches the criterion or property defined by the qualifier.

**2.** A method according to claim 1, and comprising the further step of defining (109) at least one operator, wherein the step of defining at least one pattern is additionally based on the at least one operator such that the at least one pattern comprises at least the at least one token, or the at least one group of tokens, associated with the at least one qualifier, at least one moderator and at least one operator.

**3.** A method according to any one of the above claims, and comprising the further step of defining (110) within the pattern at least one sub-pattern, wherein the step of comparing (107) the at least one pattern and the input to determine whether the input matches the at least one pattern comprises:
comparing the at least one sub-pattern and the input to determine whether the input comprises a match to the sub-pattern, and
determining that the input matches the least one pattern only if the at least one sub-pattern is determined to be comprised in the input.

**4.** A method according to any one of the above claims, and further comprising the step of adding (111) to the at least one token, or to the at least one group of tokens, at least one capture associated with at least one of a group of words or a specific word instance, wherein the at least one capture is associated with a variable and wherein the step of comparing (107) comprises searching for the at least one of the group of words or the specific word instance associated with a capture and, if found, store the at least one of the group of words or the specific word instance in the variable associated with the capture.

**5.** A method according to any one of the above claims, wherein the qualifier is a qualifier function, the qualifier function defining at least one criterion of the group of words or of the specific word instance of the at least one token, or of the at least one group of tokens, and the qualifier function defining a function, which as input takes one or more function arguments, including an argument being at least one word, or a list of words, of the input to be matched,
wherein the step of comparing (107) the at least one pattern and the input to determine whether the input matches the at least one pattern comprises:
- calling the qualifier function with one or more words of the input as one or more function arguments,
- determining whether at least one word, or a list of words, of the input matches the at least one criterion defined by the qualifier function, and
- determining that the input matches the least one pattern only if at least one word, or the list of words, of the input matches the at least criterion defined by the qualifier function.

**6.** A method according to any one of the above claims, wherein the qualifier is a qualifier criterion defining at least one property associated with at least one word of the group of words or of the specific word instance of the at least one token, or the at least one group of tokens, and which as input takes one or more function arguments, including an argument being at least one word, or a list of words, of the input to be matched,
wherein the step of comparing (107) the at least one pattern and the input to determine whether the input matches the at least one pattern comprises:
- testing the qualifier criterion with one or more words of the input as one or more arguments,
- determining whether a match with the at least one word of at least one of the group of words and the specific word instance associated with a qualifier criterion is found in the input,
- if a match is found, testing whether the match found matches the at least one property defined by the qualifier criterion, and
- determining that the input matches the least one pattern only if the match found matches the at least one property defined by the qualifier criterion.

**7.** A method according to any one of the above claims, and further comprising defining (112), based on at least the plurality of tokens and the plurality of moderators, at least one further pattern, wherein the at least one further pattern comprises embedded therein the at least one pattern, or wherein the at least one pattern comprises embedded therein the at least one further pattern.

**8.** A method according to any one of the above claims, and further comprising the step of, based on the at least one pattern defining a sequence of natural language words, creating (113) an executable abstract syntax tree, wherein the step of comparing the at least one pattern and the input to determine whether the input matches the at least one pattern is performed based on the executable abstract syntax tree.

**9.** A method according to any one of the above claims, and further comprising the step of generating (108) an output indicating whether the input matches the at least one pattern.

**10.** A method according to any one of the above claims, wherein the input comprising a text string of natural language is provided from a database or memory within the data processing device, or wherein the input comprising a text string of natural language is provided using an external input device coupled to the data processing device.

**11.** A device for recognizing patterns in natural language, the device (1) comprising:
a data processing device (2), and
a non-transitory computer readable data storage device (3),
the non-transitory computer readable data storage device comprising instructions configured for execution at the data processing device such as to cause the data processing device to:
define a plurality of tokens, each token defining a group of words or a specific word instance,
define a plurality of moderators, each moderator defining a number of times a specific token is to occur,
define at least one qualifier,
associate the at least one qualifier with at least one token, or at least one group of tokens, of the plurality of tokens, the at least one qualifier defining at least one criterion or property for at least one word of the group of words or of the specific word instance of the at least one token, or the at least one group of tokens,
based on the plurality of tokens and the plurality of moderators define at least one pattern, the at least one pattern comprising at least the at least one token, or the at least one group of tokens, associated with the at least one qualifier and at least one moderator, and the at least one pattern defining a sequence of natural language words,
receive an input comprising a text string of natural language,
compare the at least one pattern and the received input to determine whether the input matches the at least one pattern, wherein the comparison comprises:
- to determine whether a match with the at least one token, or the at least one group of tokens, associated with the at least one qualifier is found in the input,
- if a match with the at least one token associated with the at least one qualifier is found in the input, to test whether the match found matches the criterion or property defined by the qualifier, and
- to determine that the input matches the least one pattern only if the match found matches the criterion or property defined by the qualifier.

**11.** A device according to claim 10, wherein the non-transitory computer readable data storage device (3) further comprises instructions configured for execution at the data processing device such as to cause the data processing device to perform a method according to any one of claims 2 to 10.

**12.** A non-transitory computer readable data storage device comprising instructions which, when executed on a computer, causes the computer to carry out a method according to any one of claims 1-10.

**13.** A computer program product comprising instructions which, when the program is executed by a computer, cause the computer to carry out a method according to any one of claims 1-10.
